# EUROPÄISCHE PATENTSCHRIFT

(11) **EP 3 453 568 B1**
(45) Veröffentlichungstag und Bekanntmachung des Hinweises auf die Patenterteilung: **16.09.2020**
(21) Anmeldenummer: 18190521.7
(22) Anmeldetag: 23.08.2018
(51) Int. Cl.: B60P 7/08

(54) **TRANSPORTFAHRZEUG, VERFAHREN ZU DESSEN BETRIEB UND ÜBERWACHUNGSEINRICHTUNG DAFÜR**
TRANSPORT VEHICLE, METHOD FOR OPERATING SAME AND MONITORING DEVICE FOR SAME
VÉHICULE DE TRANSPORT, SON PROCÉDÉ DE FONCTIONNEMENT ET DISPOSITIF DE SURVEILLANCE CORRESPONDANT

(30) Priorität: 08.09.2017 DE 102017120785
(43) Veröffentlichungstag der Anmeldung: 13.03.2019
(73) Patentinhaber: Universität Kassel, 34125 Kassel (DE)
(72) Erfinder: Hensel, Oliver, 37215 Witzenhausen (DE); Siebald, Hubertus, 34346 Hann. Münden (DE); Wilczek, Ulrike, 37213 Witzenhausen (DE); Kaufmann, Hans-Hermann, 37213 Witzenhausen (DE); Kälberloh, Roman, 37213 Witzenhausen (DE)
(74) Vertreter: Schneider, Peter Christian

(56) Entgegenhaltungen:
- EP-A2- 2 774 813
- DE-A1-102014 012 508
- DE-U1-202016 105 855
- US-A1- 2003 174 055

## Beschreibung

Die Erfindung bezieht sich auf ein Transportfahrzeug mit
- einer Ladefläche zur Aufnahme eines Ladegutes, wobei die Ladefläche eine Mehrzahl von Anlenkstellen zur Anlenkung von Spannmitteln, mittels derer das Ladegut auf der Ladefläche teilumschlingend verspannbar ist, aufweist,
- einem Primärsensor zur Erfassung einer vom Spannzustand der Spannmittel abhängigen Messgröße und zur Erzeugung eines entsprechenden Primärsensorsignals sowie
- einer signalübertragend mit dem Primärsensor gekoppelten Steuereinheit, die
   ∘ zur Ermittlung jeweils aktueller Parameterwerte eines für den Spannzustand der Spannmittel repräsentativen Parameters aus dem Primärsensorsignal,
   ∘ zur Konformitätsprüfung der ermittelten Parameterwerte in Bezug auf vorgegebene Referenzwerte und
   ∘ zur Ansteuerung eines Warnsignals im Fall unzureichender Konformität, eingerichtet ist.

Die Erfindung bezieht sich weiter auf ein Verfahren zum Betrieb eines solchen Transportfahrzeugs.

Die Erfindung bezieht sich schließlich auf eine insbesondere als Nachrüstsatz vertreibbare Überwachungseinrichtung für ein Transportfahrzeug mit einer Ladefläche zur Aufnahme eines Ladegutes, wobei die Ladefläche eine Mehrzahl von Anlenkstellen zur Anlenkung von Spannmitteln, mittels derer das Ladegut auf der Ladefläche teilumschlingend verspannbar ist, aufweist,
wobei die Überwachungseinrichtung umfasst:
- einen Primärsensor zur Erfassung einer vom Spannzustand der Spannmittel abhängigen Messgröße und zur Erzeugung eines entsprechenden Primärsensorsignals sowie
- eine signalübertragend mit dem Primärsensor gekoppelte Steuereinheit, die
   ∘ zur Ermittlung jeweils aktueller Parameterwerte eines für den Spannzustand der Spannmittel repräsentativen Parameters aus dem Primärsensorsignal,
   ∘ zur Konformitätsprüfung der ermittelten Parameterwerte in Bezug auf vorgegebene Referenzwerte und
   ∘ zur Ansteuerung eines Warnsignals im Fall unzureichender Konformität, eingerichtet ist.

### Stand der Technik

Gattungsgemäße Transportfahrzeuge, Überwachungseinrichtungen und Verfahren zu deren Betrieb sind bekannt aus der DE 10 2014 012 508 A1.

Es ist allgemein bekannt, Ladegut auf der Ladefläche eines Transportfahrzeugs zur Sicherung gegen Herabfallen während des Transports zu verspannen. Hierzu finden regelmäßig Spannmittel, insbesondere in Form von Spannketten oder Zurrgurten Anwendung. Diese werden an geeigneten Anlenkstellen der Ladefläche an dieser angelenkt. Beispielsweise können die Anlenkstellen als Ösen ausgebildet sein, durch welche der Zurrgurt gezogen oder an welchen eine Spannkette beispielsweise mittels eines Schäkels befestigt wird. Die Spannmittel werden sodann vertikal und/oder horizontal um das Ladegut herumgeführt, sodass sie dieses teilweise umschlingen. Danach wird das jeweils freie Ende der Spannmittel ebenfalls an einer geeigneten Anlenkstelle der Ladefläche fixiert. Die zur Ladungssicherung notwendige Spannung der Spannmittel kann bei leichtem Ladegut dabei unmittelbar manuell aufgebracht werden. Bei schwererem Ladegut, welches eine höhere Spannung der Spannmittel erfordert, können diese durch spezielle Spannmechanismen, z.B. Ratschensysteme an Zurrgurten, motorisch oder händisch gespannt werden.

Vor Fahrtbeginn ist der Führer des Transportfahrzeugs für eine ordnungsgemäße Ladungssicherung verantwortlich. Hierzu hat er insbesondere die an den Spannmitteln anliegende Spannung zu überprüfen. Als problematisch erweist sich jedoch regelmäßig, dass die Spannung während des Transportes nachlassen kann. Gründe hierfür können plötzliche Krafteinwirkungen, etwa durch scharfes Bremsen, oder ein "Setzen" von Ladegut und Spannmitteln aufgrund von Vibrationen des Gesamtsystems während des Transportes sein. Der Führer des Transportfahrzeugs ist daher zu regelmäßigen Kontrollen verpflichtet. Diese erfordern jedoch das Anfahren eines geeigneten Haltepunktes und die zeitaufwendige, persönliche Überprüfung jedes einzelnen Spannmittels. Es kann daher leicht vorkommen, dass die erforderlichen Überprüfungen unterlassen werden, was zur Gefährdung des Ladegutes, des Bedienpersonals und des übrigen Verkehrs führen kann.

Aus der eingangs genannten, gattungsbildenden Druckschrift ist ein automatisiertes Überwachungssystem bekannt, bei welchem außer dem Spannmechanismus auch ein Kraftsensor in einen Zurrgurt integriert ist. Dieser Sensor erfasst unmittelbar die am Zurrgurt anliegende Spannung als eine vom Spannzustand des eingesetzten Spannmittels abhängige Messgröße und erzeugt darauf ein entsprechendes Primärsensorsignal. Das aktuelle Primärsensorsignal wird über eine Drahtlosverbindung in bestimmten zeitlichen Abständen an eine Steuereinheit übermittelt. Die Steuereinheit kann im üblichen Fall mehrerer Spannmittel mit den Primärsensoren sämtlicher Spannmittel gekoppelt sein. Zur Auswertung ermittelt die Steuereinheit aus dem Primärsensorsignal die aktuellen Kraftwerte, d.h. die aktuellen Werte des für den Spannzustand des Spannmittels repräsentativen Parameters "Spannkraft". Hierbei handelt es sich um einen Einzelparameter. Der Begriff "Parameter" im Kontext der vorliegenden Beschreibung ist jedoch weiter zu verstehen und umfasst auch vorgegebene Konstellationen mehrerer Einzelparameter. Die ermittelten Werte werden sodann einer Konformitätsprüfung in Bezug auf vorgegebene Referenzwerte, die in der Steuereinheit hinterlegt sind, unterzogen. Insbesondere wird überprüft, ob eine vorgegebene Mindestspannung erreicht und vorgegebene Höchstspannungen nicht überschritten werden. Sofern die ermittelten Parameterwerte innerhalb vorgegebener Toleranzen liegen, wird dies als Konformität des tatsächlichen Spannzustandes, anderenfalls als unzureichende Konformität interpretiert. Im Fall unzureichender Konformität wird sodann ein optisches und/oder akustisches Warnsignal angesteuert, welches dem Führer des Transportfahrzeugs die Notwendigkeit einer zeitnahen Kontrolle und Nachbesserung der Ladungssicherung signalisiert.

Nachteilig bei dem bekannten System ist die Integration des Kraftsensors in die Spannmittel, insbesondere den Zurrgurt. Diese ist zur unmittelbaren Messung der Spannkraft zwar erforderlich; sie macht jedoch die Verwendung spezieller Zurrgurte erforderlich. Solche Spezial-Zurrgurte sind aufgrund ihrer Spezialausstattung deutlich teurer als herkömmliche Zurrgurte. Hinzu kommt eine erhöhte Defektanfälligkeit, die sich aus dem typischerweise rauen Umgang mit Zurrgurten beim Transportvorgang ergibt. Als problematisch erweist sich zudem die notwendige Energieversorgung der Primärsensoren. Und schließlich kann es im Hinblick auf die Kompatibilität zwischen Zurrgurten und Steuereinheiten unterschiedlicher Hersteller, die im praktischen Transportalltag häufig aufeinander treffen können, zu Schwierigkeiten kommen.

Auch die EP 2 774 813 A2, die den nächstliegenden Stand der Technik darstellt und den Oberbegriff der Ansprüche 1 und 8 offenbart, die DE 20 2016 105 855 U1 und die US 2003/0174055 A1 offenbaren derartige Systeme, bei denen auf den Zurrgurt aufgesetzte bzw. diesem ein- oder angefügte Sensoren die auf den Zurrgurt wirkende Spannkraft messen.
Aus der DE 20 2012 012 665 U1 ist ein im Grunde gleichartiges System bekannt, wobei die genannte Druckschrift auf die spezielle Ausgestaltung des in den Zurrgurt integrierten Kraftsensors abhebt.
Die DE 10 2015 217 601 A1 offenbart ein System, bei dem Kraftsensoren in Kantenschutzelemente eingebaut sind, die als Zwischenlagen in den Kontaktbereichen zwischen Ladegut und Zurrgurt dienen. Dies erlaubt zwar die Verwendung herkömmlicher Zurrgurte; im Übrigen leidet dieses System jedoch ebenfalls an den oben beschriebenen Unzulänglichkeiten.

### Aufgabenstellung

Es ist die Aufgabe der vorliegenden Erfindung, ein Transportfahrzeug bzw. eine Überwachungseinrichtung der gattungsgemäßen Art derart weiterzubilden, dass die vorgenannten Probleme behoben werden und dass insbesondere der Umgang mit losen Spezialbauteilen im praktischen Transportalltag vermieden wird.

Es ist eine weitere Aufgabe der Erfindung, ein besonders vorteilhaftes Verfahren zum Betrieb eines erfindungsgemäßen Transportfahrzeugs anzugeben.

### Darlegung der Erfindung

Die oben erstgenannte Aufgabe wird im Zusammenhang mit den Merkmalen des Oberbegriffs von Anspruch 1 dadurch gelöst, dass der Primärsensor ausgebildet ist als ein von den Spannmitteln separater, starr mit der Ladefläche gekoppelter Schwingungssensor, mittels dessen ein Schwingungszustand der Ladefläche messbar ist.

Sie wird weiter im Zusammenhang mit den Merkmalen des Oberbegriffs von Anspruch 8 dadurch gelöst, dass der Primärsensor ausgebildet ist als ein von den Spannmitteln separater, starr mit der Ladefläche koppelbarer Schwingungssensor, mittels dessen im gekoppelten Zustand ein Schwingungszustand der Ladefläche messbar ist.

Die oben zweitgenannte Aufgabe wird gelöst durch ein Verfahren gem. Anspruch 6, d.h. durch ein Verfahren zum Betrieb eines erfindungsgemäßen Transportfahrzeugs, auf dessen Ladefläche ein Transportgut mittels an den Anlenkpunkten angelenkter Spannmittel teilumschlingend verspannt ist, umfassend
- einen Kalibrierschritt, der sich an einen Fahrtbeginn des Transportfahrzeugs anschließt und im Rahmen dessen kalibrierte Referenzwerte für spätere Konformitätsprüfungen aus dem während des Kalibrierschrittes erzeugten Primärsensorsignal ermittelt und hinterlegt werden,
- einen Normalbetriebsschritt, der sich an den Kalibrierschritt anschließt und im Rahmen dessen die Konformitätsprüfung der aus dem aktuellen Primärsensorsignal ermittelten Parameterwerte des repräsentativen Parameters in Bezug auf die im Kalibrierschritt hinterlegten, kalibrierten Referenzwerten erfolgt.

Bevorzugte Ausführungsformen der Erfindung sind Gegenstand der abhängigen Patentansprüche.

Der zentrale Gedanke der Erfindung ist es, einen von den Spannmitteln separaten und fest mit der Ladefläche des Transportmittels verbundenen bzw. verbindbaren Primärsensor zu verwenden. Dies schließt allerdings die übliche Messung einer Kraft als für den Spannzustand der Spannmittel repräsentativen Parameter aus. Die Erfindung sieht daher vor, alternativ den Schwingungszustand der Ladefläche zu messen und aus dem resultierenden Schwingungssignal den für den Spannzustand der Spannmittel repräsentativen Parameter zu ermitteln. Es liegt die Erkenntnis zugrunde, dass die Spannung der Spannmittel Einfluss auf das Schwingungsverhalten der Ladefläche hat. Das Schwingungsverhalten der Ladefläche ist daher abhängig vom Spannzustand, sodass Änderungen des Schwingungsverhaltens Rückschlüsse auf Änderungen des Spannzustandes erlauben.

Dabei können bei unterschiedlichen Ausführungsformen der Erfindung unterschiedliche Schwingungsgrößen gemessen werden. Bevorzugt ist der Primärsensor als ein Beschleunigungsaufnehmer ausgebildet, der ein für die alternierende Beschleunigung der Ladefläche am Ort des Sensors repräsentatives Primärsensorsignal erzeugt. Derartige Beschleunigungsaufnehmer mit hoher Dynamik und kleinen Baumaßen sind kostengünstig am Markt erhältlich. Sie basieren meist auf Piezo-Technik. Alternativ können aber auch Geschwindigkeitsaufnehmer, Auslenkungsmesser, Dehnungssensoren oder ähnliches Einsatz finden. Insbesondere für höhere Frequenzen findet auch der Begriff des Körperschallmikrofons Anwendung. Entsprechend weit ist der Begriff "Schwingungssensor" auszulegen. Entscheidend ist, dass eine Schwingungseigenschaft der Ladefläche gemessen wird, was insbesondere durch die genannte, starre Kopplung des Sensors mit der Ladefläche verwirklicht wird. Selbstverständlich spielt es für die vorliegende Erfindung keine Rolle, ob digitale oder analoge Sensoren eingesetzt werden. Bevorzugt werden erstere.

Welcher spezielle Parameter, d.h. welche spezielle Signaleigenschaft als für den Spannzustand repräsentativ aus dem Schwingungssignal, d.h. aus dem Primärsensorsignal, ermittelt wird, kann bei unterschiedlichen Ausführungsformen der Erfindung durchaus unterschiedlich sein. Die Wahl kann u.a. vom Typ des Transportfahrzeuges sowie der Anzahl und Position der Primärsensoren an der Ladefläche abhängen. Bevorzugte Ausführungsformen sollen weiter unten diskutiert werden.

Zunächst muss verstanden werden, dass das Schwingungsverhalten der Ladefläche lediglich ein Aspekt des Schwingungsverhaltens des Gesamtsystems aus Ladefläche, Ladegut und Spannmitteln, gemessen an einem gegebenen Punkt der Ladefläche (nämlich am Ort des Primärsensors) ist. Dieses Gesamt-Schwingungsverhalten ist in zweifacher Weise vom Spannzustand der Spannmittel abhängig. Zum einen tragen Eigenschwingungen der Spannmittel in Form additiver Terme zur Gesamtschwingung und damit auch zum Primärsensorsignal bei. Diese sind insbesondere in ihrer Amplitude abhängig vom Spannzustand. Zum anderen beeinflusst der Spannzustand die Lage der Resonanzfrequenzen des Gesamtsystems, die durch die Vibrationen bei der Fahrt des Transportfahrzeugs angeregt werden können.

Bei im Vergleich zu den aufbringbaren Spannkräften großen Transportfahrzeugen und schwerem Ladegut, wie dies typischerweise bei Transport-LKW der Fall ist, überwiegt der oben erläuterte additive Effekt bei weitem denjenigen der Resonanzfrequenzverschiebung. Bei einer bevorzugten Ausführungsform ist daher vorgesehen, dass der für den Spannzustand der Spannmittel repräsentative Parameter einen Schwingungspegel des Primärsensorsignals innerhalb eines vorgegebenen Frequenzintervalls umfasst. Die entsprechende Signalanalyse, die auf eine Pegelmessung reduziert werden kann, ist dabei besonders einfach. Die genannte Vorgabe des Frequenzintervalls, innerhalb dessen die Pegelmessung zu erfolgen hat, kann auf unterschiedliche Weise gestaltet sein. So hat grundsätzlich jeder Schwingungssensor einen Empfindlichkeitsbereich, außerhalb dessen er kein Signal aufzunehmen vermag. Hierdurch wird ein (relativ großes) Frequenzintervall für die Pegelmessung definiert. Denkbar ist jedoch auch der Einsatz von Frequenzfiltern, die analog elektronisch oder digital ausgebildet und im Primärsensor selbst und/oder in der Steuereinheit positioniert sein können. Als ein in der Praxis günstiges Frequenzintervall für eine solche Pegelmessung hat sich der Bereich zwischen 1 kHz und 5 kHz erwiesen. Als ebenfalls tauglich hat sich eine Frequenzbegrenzung durch einen Hochpassfilter mit einer Grenzfrequenz von etwa 1 kHz gezeigt.

Bei leichten Transportfahrzeugen, beispielsweise bei Anhängern für Sportboote, kann die Verspannung jedoch durchaus deutlich messbaren Einfluss auf die Lage der Resonanzfrequenzen des Gesamtsystems nehmen. Bei einer anderen Ausführungsform der Erfindung ist daher vorgesehen, dass der für den Spannzustand der Spannmittel repräsentative Parameter eine Position eines lokalen Extremums innerhalb eines Schwingungsspektrums des Primärsensorsignals umfasst. Die Erfassung eines solchen Parameters setzt selbstverständlich eine eingehendere schwingungstechnische Analyse des Primärsensorsignals voraus. Insbesondere muss das als Zeitsignal eingehende Primärsensorsignal in ein Frequenzspektrum umgerechnet und dieses hinsichtlich seiner lokalen Maxima und Minima analysiert werden. Entsprechende Analysetechniken sind dem Fachmann jedoch bekannt.

In allen Fällen gilt, dass die spezielle Wahl des repräsentativen Parameters auf die Besonderheiten des jeweiligen Transportfahrzeugs und ggf. der Art des vorwiegenden Ladegutes abgestimmt sein sollte. Es genügt jedoch, eine solche Abstimmung einmalig bei Installation des oder der Primärsensoren an der Ladefläche vorzunehmen. In diesem Zusammenhang sei darauf hingewiesen, dass der oder die Primärsensoren bevorzugt in der Nähe, günstigerweise nicht weiter als 20 cm entfernt von einer jeweils zugeordneten Anlenkstelle für die Spannmittel positioniert werden sollte. Hier macht sich der Einfluss des Spannmittel-Spannzustandes besonders bemerkbar.

Zum Schutz vor Beschädigung kann der Primärsensor auf der Unterseite der Ladefläche, insbesondere unmittelbar unter einem Anlenkpunkt positioniert werden. Auch die Positionierung in einer Ausnehmung der Ladefläche ist eine geeignete Schutzmaßnahme. Die Verbindung zur Steuereinheit kann drahtlos oder drahtgebunden erfolgen. Eine Energieversorgung des Primärsensors kann lokal durch eine integrierte Batterie oder durch Anschluss an das Bordnetz erfolgen. Die hier für einen Primärsensor beschriebenen Maßnahmen können im Fall mehrerer Primärsensoren selbstverständlich auf jeden einzelnen Primärsensor Anwendung finden.

Eine günstige Weiterbildung der Erfindung zeichnet sich aus durch einen signalübertragend mit der Steuereinheit gekoppelten, ein Kontrollsensorsignal erzeugenden Kontrollsensor, der als ein mit einem von der Ladefläche schwingungsentkoppelten Teil des Transportfahrzeugs starr gekoppelter Schwingungssensor ausgebildet ist, wobei die Vorgabe der Referenzwerte für die Konformitätsprüfung von einem jeweils aktuellen Kontrollsensorsignal abhängig ist. Insbesondere Landtransportfahrzeuge, wie beispielsweise LKW, befahren häufig stark unterschiedliche Untergründe, wie beispielsweise Asphalt, Kopfsteinpflaster, Schotter etc. Dies führt zu stark unterschiedlichen Anregungen des Gesamtschwingungssystems. Folglich können sich auch die Primärsensorsignale der erfindungsgemäßen Primärsensoren trotz gleichen Spannzustandes der Spannmittel deutlich voneinander unterscheiden. Dies kann zu Komplikationen bei der Konformitätsprüfung führen. Bei der genannten Weiterbildung ist daher ein vorzugsweise zum Primärsensor baugleicher Kontrollsensor vorgesehen, der an einer Stelle des Transportfahrzeugs positioniert ist, die von den Schwingungen des Systems aus Ladefläche, Ladegut und Spannmitteln nicht oder nur wenig beeinflusst wird. Beispielsweise kann der Kontrollsensor im Bereich einer Radachse liegen, wo er sehr deutlich deren vom aktuellen Untergrund beeinflusste Vibrationen wahrnimmt, über die Stoßdämpfer jedoch von der Ladefläche schwingungsentkoppelt ist. Das Kontrollsensorsignal, welches ebenfalls an die Steuereinheit gesendet und gemeinsam mit dem Primärsensorsignal einer Auswertung unterzogen wird, kann daher vom Spannzustand der Spannmittel unabhängige Informationen über die vom Untergrund erzeugten Schwingungen liefern, sodass die Extraktion der spannzustandabhängigen Information aus dem Primärsensorsignal erleichtert wird. Die im Anspruch gewählte Formulierung "Vorgabe der Referenzwerte für die Konformitätsprüfung" ist dabei weit zu auszulegen. Es sollen Varianten, bei denen sich die Referenzwerte in Abhängigkeit vom Kontrollsensorsignal ändern, ebenso umfasst sein, wie Varianten, bei denen der aus dem Primärsensorsignal ermittelte repräsentative Parameter in Abhängigkeit von dem Kontrollsensorsignal modifiziert, beispielsweise skaliert, wird. Ebenso ist es möglich, die Toleranzgrenzen um ansonsten unveränderte Referenzwerte in Abhängigkeit von dem Kontrollsensorsignal zu verändern.

Alternativ oder zusätzlich kann vorgesehen sein, dass die Steuereinheit signalübertragend mit einem ein Fahrtgeschwindigkeitssensorsignal erzeugenden Fahrtgeschwindigkeitssensor des Transportfahrzeugs gekoppelt ist, wobei die Vorgabe der Referenzwerte für die Konformitätsprüfung von dem jeweils aktuellen Fahrtgeschwindigkeitssensorsignal abhängig ist. Dies berücksichtigt die Tatsache, dass sich das Schwingungsverhalten des Gesamtsystems mit der Fahrtgeschwindigkeit des Transportfahrzeugs ändern kann. Hierzu trägt beispielsweise eine veränderte Rotationsfrequenz von Rädern bei. Ebenso kann auch die Stärke des Fahrwindes Einfluss auf die Schwingungen der Spannmittel haben. Ein Fahrtgeschwindigkeitssensor ist typischerweise bei jeder Art von Transportfahrzeugen vorhanden. Es erscheint daher in der Regel nicht erforderlich, im Rahmen der Erfindung hierfür einen eigenen Sensor vorzusehen. Hinsichtlich der Formulierung "Vorgabe der Referenzwerte für die Konformitätsprüfung" gilt *mutatis mutandis* das oben im Kontext des Kontrollsensors Gesagte.

Der Fachmann wird verstehen, dass neben erfindungsgemäßen Transportfahrzeugen auch aus geeigneten Sensoren und einer erfindungsgemäß eingerichteten Steuereinheit bestehende Nachrüstsätze eine sinnvolle merkantile Einheit bilden, auf die mit Anspruch 8 ein separates Schutzbegehren gerichtet ist.

Insbesondere bei Transportfahrzeugen, die stark unterschiedliche Transportgüter laden, kann eine allgemeinverbindliche Vorgabe der Referenzwerte schwierig sein. Das oben genannte, besonders bevorzugte Betriebsverfahren für ein erfindungsgemäßes Transportfahrzeug sieht daher zu Fahrtbeginn einen Kalibrierschritt vor. Dabei wird davon ausgegangen, dass der Führer des Transportfahrzeuges sämtliche Spannmittel zunächst ordnungsgemäß gespannt hat. Es wird somit davon ausgegangen, dass sich das Transportfahrzeug mit der verspannten Ladung zumindest zu Fahrtbeginn in einem optimalen Zustand befindet. Dieser wird im Kalibrierschritt erfasst. Das erfolgt über die Messung des Primärsensorsignals, das im Kalibrierschritt genauso wie im Rahmen späterer Konformitätsprüfungen auf den repräsentativen Parameter hin analysiert wird. Die dabei ermittelten Parameterwerte werden jedoch keiner Konformitätsprüfung unterzogen, sondern zur Definition der Referenzwerte für nachfolgende Konformitätsprüfungen, die im Normalbetriebsschritt durchgeführt werden, verwendet. Die zeitlichen Grenzen des Kalibrierschritts können dabei unterschiedlich gestaltet sein. Beispielsweise kann man ihn automatisch beginnen lassen, sobald das Transportfahrzeug eine vorgegebene Mindestgeschwindigkeit von beispielsweise 30 km/h erreicht hat. Eine automatische Beendigung kann der Kalibrierschritt beispielsweise nach einer vorgegebenen Zeitspanne oder nach einer vorgegebenen Fahrstrecke erfahren. Selbstverständlich ist es auch möglich, den Kalibrierschritt manuell durch den Fahrzeugführer starten und/oder beenden zu lassen.

Wie erwähnt, baut das erfindungsgemäße Verfahren auf der Annahme eines optimalen Ladezustandes bei Fahrtbeginn auf. In Einzelfällen, beispielsweise bei einem überhasteten Start, kann diese Annahme unzutreffend sein. In diesem Fall würde ein suboptimaler Ladezustand als Grundlage für die Referenzwertdefinition dienen, sodass bei Ausschöpfung der Toleranzgrenzen in nachfolgenden Konformitätsprüfungen ein unsicherer Ladezustand, insbesondere ein zu lockerer Spannzustand der Spannmittel, fälschlicherweise als vorgabekonform beurteilt werden könnte. Bei einer Weiterbildung des erfindungsgemäßen Verfahrens ist daher vorgesehen, dass vor Beginn des Normalbetriebsschritts die im Rahmen des Kalibrierschritts hinterlegten, kalibrierten Referenzwerte durch Vergleich mit in einem Initialreferenzspeicher der Steuereinheit hinterlegten, festen Initialreferenzwerten einem Plausibilitätstest unterzogen werden. Die festen Initialreferenzwerte repräsentieren "vernünftige" Parameterwerte des repräsentativen Parameters mit Toleranzen, die typische Ladezustände umfassen. Unabhängig von dem speziellen Ladezustand im Einzelfall, sollten die in einem Kalibrierschritt ermittelten kalibrierten Referenzwerte innerhalb dieser Toleranzen liegen, sofern die oben erläuterte Annahme eines optimalen Ladezustandes bei Fahrtbeginn zutreffend ist. Weichen die kalibrierten Referenzwerte jedoch zu stark von den festen Initialreferenzwerten ab, was in besagtem Plausibilitätstest geprüft wird, so wird dies als Indiz dafür interpretiert, dass der Ladezustand bei Fahrtbeginn eben nicht optimal war und die kalibrierten Referenzwerte entsprechend nicht zuverlässig sind. Ein solches Ergebnis kann dann zur Generierung eines geeigneten Warnhinweises an den Fahrzeugführer genutzt werden.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung eines erfindungsgemäßen Transportfahrzeugs in Seitenansicht,
- Figur 2:: das Transportfahrzeug von Figur 1 in Rückansicht,
- Figur 3:: ein beispielhaftes Primärsensorsignal (Beschleunigung), gewonnen an einem Test-Transportfahrzeug mit Zurrgurtspannung 2 kN,
- Figur 4:: ein beispielhaftes Primärsensorsignal (Beschleunigung), gewonnen an dem Test-Transportfahrzeug mit Zurrgurtspannung 215 N,
- Figur 5:: ein beispielhaftes Primärsensorsignal (Beschleunigung), gewonnen an dem Test-Transportfahrzeug mit Zurrgurtspannung 39 N sowie
- Figur 6:: Frequenzspektren der Signale der Figuren 3 bis 5.

### Beschreibung bevorzugter Ausführungsformen

Gleiche Bezugszeichen in den Figuren deuten auf gleiche oder analoge Elemente hin.

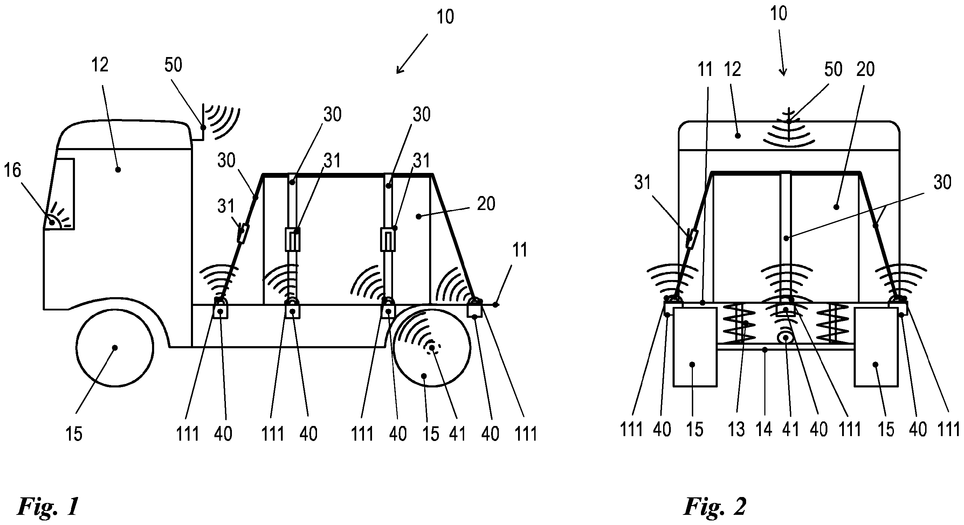

Die Figuren 1 und 2 zeigen in stark schematisierter Darstellung ein erfindungsgemäßes Transportfahrzeug 10. Die konkreten Abbildungen erheben dabei selbstverständlich keinerlei Anspruch auf maßstäbliche Genauigkeit. Das Transportfahrzeug 10 umfasst im Wesentlichen eine Ladefläche 11 und ein Führerhaus 12, die gemeinsam in üblicher Weise über eine Stoßdämpferanordnung 13 auf jeweils an einer Achse 14 gelagerten Rädern 15 gelagert sind. Auf der Ladefläche 11 ist ein Ladegut 20 positioniert, welches mittels Zurrgurten 30 auf der Ladefläche 10 verspannt ist. Hierzu sind die Zurrgurte 30 durch auf der Ladefläche 11 fixierte Ösen 111 geführt und jeweils mittels eines eigenen Spannmechanismus 31 gespannt.

Erfindungsgemäß ist in der Nähe jeder Öse 111 ein Schwingungssensor 40 starr mit der Ladefläche 11 verbunden. Bei der dargestellten Ausführungsform sind die Schwingungssensoren 40 an der Unterseite der Ladefläche 11 fixiert. Die Positionierung an dieser Stelle hat zwei Vorteile. Zum einen sind die Schwingungssensoren 40 dort weitgehend gegen mechanische Beschädigung während des Be- und Entladeprozesses geschützt. Zum anderen ist es möglich, sie in maximale Nähe zu den Anlenkpunkten der Zurrgurte 30, d.h. zu den Ösen 111 zu bringen, indem sie unmittelbar unterhalb der Anlenkpunkte positioniert werden. Alternativ oder zusätzlich ist es auch möglich, die Schwingungssensoren 40 in Ausnehmungen der Ladefläche geschützt zu positionieren. Der Fachmann wird verstehen, dass diese Überlegungen unabhängig von der konkret gezeigten Ausführungsform Gültigkeit haben. Die Schwingungssensoren 40 können, wie weiter oben bereits ausgeführt, als Auslenkungs-, Geschwindigkeits-, Beschleunigungs-, Dehnungs- oder als ähnliche Sensoren, bevorzugt jedoch als piezoelektrische Beschleunigungssensoren ausgebildet sein.

Die Schwingungssensoren 40 dienen als die erfindungsgemäßen Primärsensoren.

Bei der dargestellten Ausführungsform sind die Primärsensoren 40 mit einer Drahtlos-Sendeeinheit versehen, die es ihnen ermöglicht, die von ihnen erzeugten Primärsensorsignale, die die Schwingungsbewegung der Ladefläche 11 an den jeweiligen Sensorpositionen repräsentieren, an eine Steuereinheit zu senden, die bei der gezeigten Ausführungsform lediglich durch eine Empfangsantenne 50 repräsentiert ist. Da insbesondere bei einer Vielzahl von Primärsensoren 40 eine detaillierte Koordination erforderlich ist, sind bevorzugt sowohl die Primärsensoren 40 als auch die Steuereinheit zu bidirektionaler Kommunikation fähig. Die Bidirektionalität ist jedoch nicht erfindungswesentlich.

Wie im allgemeinen Teil der Beschreibung ausführlich erläutert, ist die Steuereinheit eingerichtet, die Signale der Primärsensoren 40 auf Signaleigenschaften hin zu analysieren, die für den Spannzustand der Zurrgurte 30 repräsentativ sind. Beispiele hierfür sollen weiter unten noch detaillierter erläutert werden.

Im Führerhaus ist eine optische und/oder akustische Warneinrichtung 16 installiert, die mit der Steuereinheit verbunden ist und bei Erkennung einer ungenügenden Spannung der Zurrgurte durch die Steuereinheit von dieser aktiviert wird, um den Fahrzeugführer zur Überprüfung der Ladungssicherung aufzufordern.

Bei der gezeigten Ausführungsform steht ein weiterer Schwingungssensor als Kontrollsensor 41 in signalübertragender Verbindung mit der Steuereinheit. Der Kontrollsensor 41 ist im Bereich der Radachse 14 positioniert und daher über die Stoßdämpferanordnung 13 von der Ladefläche 11 schwingungsentkoppelt. Änderungen der Zurrgurtspannung wirken sich daher nicht oder nur sehr gering auf das Kontrollsensorsignal aus, sodass dieses als repräsentativ für Umgebungszustände, wie beispielsweise den aktuellen Straßenbelag, angesehen und zur Anpassung der Referenzwert-Vorgabe genutzt werden kann. Details hierzu wurden im allgemeinen Teil der Beschreibung bereits ausführlich erläutert.

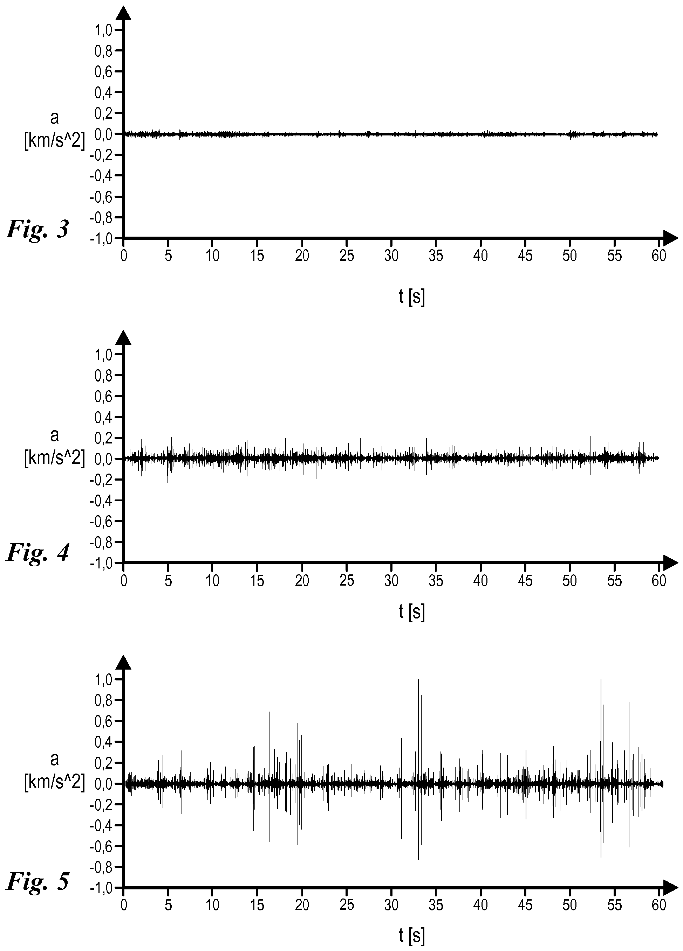

Die Figuren 3 bis 5 zeigen beispielhafte Primärsensorsignale wie sie bei einem Test-Transportfahrzeug während einer einminütigen Testfahrt aufgenommen wurden. Bei dem Test-Transportfahrzeug waren die Primärsensoren 40 als Beschleunigungssensoren ausgebildet und entsprechend ist auf der Ordinate die Beschleunigung a der Ladefläche am jeweiligen Sensorort dargestellt, wobei die Grafiken die Signale der insgesamt sechs verbauten Primärsensoren 40 überlagern.

Figur 3 zeigt das Primärsensorsignal bei einer Testfahrt, während welcher die Zurrgurte 30 mit der Spannkraft von 2000 N gespannt waren. Figur 4 zeigt das Signal während einer zweiten Testfahrt auf derselben Teststrecke mit gleicher Geschwindigkeit, wobei die Zurrgurte 30 hier mit einer Spannkraft von 215 N gespannt waren. Figur 5 zeigt das Signal während einer dritten Testfahrt auf derselben Teststrecke mit gleicher Geschwindigkeit, wobei die Zurrgurte 30 hier mit einer Spannkraft von 39 N gespannt waren.

Man erkennt deutlich die Pegelerhöhung des Signals als Folge einer Lockerung der Zurrgurte 30. Der Pegel des Primärsensorsignals kann daher unmittelbar als der für die Spannung repräsentative Parameter genutzt werden. Man beachte, dass die in den Figuren 3 bis 5 gezeigten Signale keiner künstlichen Frequenzfilterung unterworfen wurden, sodass sie das gesamte Empfindlichkeitsband der verwendeten Sensoren von 0 bis ca. 5 kHz abdecken. Es hat sich jedoch als günstig erwiesen, das Primärsensorsignal zumindest einer Hochpassfilterung mit einer Grenzfrequenz bei ca. 1 kHz zu unterwerfen, um die im Wesentlichen durch die Radrotation bedingten Schwingungen auszublenden. Zusätzliche oder alternative Frequenzfilterungen sind selbstverständlich auch möglich. Hinweise dazu kann der Fachmann der nachfolgenden Diskussion zur Frequenzanalyse entnehmen.

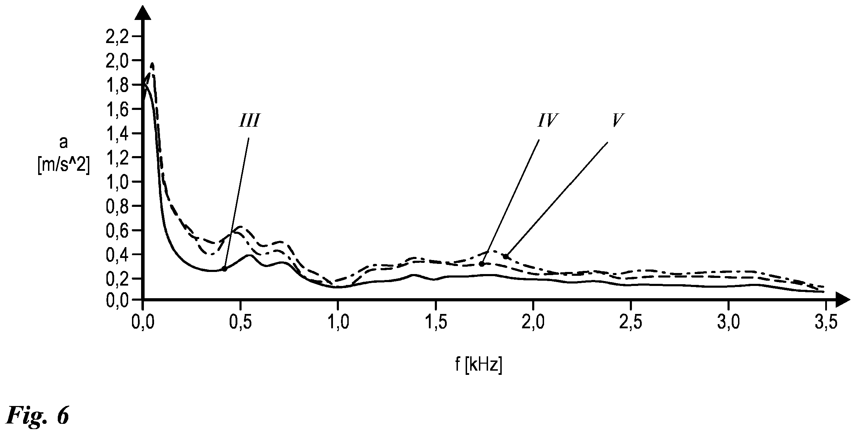

Figur 6 zeigt das Frequenzspektrum der Primärsensorsignale der Figuren 3 bis 5, wobei die Zuordnung durch die jeweils entsprechenden römischen Ziffern als Bezugszeichen kenntlich gemacht ist.

Man erkennt, dass die besonders niedrigen Frequenzen, die in erster Linie der Radrotation geschuldet sind, wenig aussagekräftig für die Zurrgurtspannung sind. Im Bereich von ca. 500 Hz erkennt der Fachmann eine deutliche Frequenzverschiebung des dortigen Peaks, nämlich bei Lockerung der Zurrgurte hin zu niedrigeren Frequenzen. Es ist daher möglich, die Frequenzverschiebung identifizierter Peaks grundsätzlich als für die Spannung repräsentativen Parameter zu verwenden. Ob dies im Einzelfall Vorteile gegenüber der zuvor erwähnten, einfachen Pegelmessung bietet, wird der Fachmann jeweils in Ansehung der speziellen Aufgabenstellung, Ausgestaltung des Transportfahrzeugs und Verteilung der Primärsensoren 40 zu entscheiden haben.

Oberhalb einer Frequenz von ca. 1 kHz ist eine weitgehend frequenzunabhängige Pegelerhöhung als Folge einer Zurrgurtlockerung erkennbar. Im Frequenzbereich von 1 bis 5 kHz, insbesondere zwischen 1,2 und 3 kHz findet sich somit eine sehr stabile und deutliche Abhängigkeit des Signalpegels von der Zurrgurtspannung. Eine entsprechende Bandpassfilterung erlaubt daher eine sehr einfache und zuverlässige Pegelmessung als spezielle Form der bevorzugten Ermittlung des für die Spannung repräsentativen Parameters.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere wird der Fachmann verstehen, dass die Erfindung nicht nur auf landgebundene, insbesondere straßengebundene Transportfahrzeuge beschränkt ist. Mit Anpassung hinsichtlich der Definition des repräsentativen Parameters ist sie in gleicher Weise für schienengebundene, wasserbasierte oder fliegende Transportfahrzeuge einsetzbar.

### Bezugszeichenliste

- 10: Transportfahrzeug
- 11: Ladefläche
- 111: Ösen
- 12: Führerhaus
- 13: Stoßdämpfereinrichtung
- 14: Radachse
- 15: Rad
- 16: Warneinrichtung
- 20: Ladegut
- 30: Spannmittel/Zurrgurt
- 31: Spannmechanismus
- 40: Primärsensor/Schwingungssensor/Beschleunigungssensor
- 41: Kontrollsensor/Schwingungssensor/Beschleunigungssensor
- 50: Empfangsantenne

## Patentansprüche

1. Transportfahrzeug mit
- einer Ladefläche (11) zur Aufnahme eines Ladegutes (20), wobei die Ladefläche (11) eine Mehrzahl von Anlenkstellen (111) zur Anlenkung von Spannmitteln (30), mittels derer das Ladegut (20) auf der Ladefläche (11) teilumschlingend verspannbar ist, aufweist,
- einem Primärsensor (40) zur Erfassung einer vom Spannzustand der Spannmittel (30) abhängigen Messgröße und zur Erzeugung eines entsprechenden Primärsensorsignals sowie
- einer signalübertragend mit dem Primärsensor (40) gekoppelten Steuereinheit, die
∘ zur Ermittlung jeweils aktueller Parameterwerte eines für den Spannzustand der Spannmittel (30) repräsentativen Parameters aus dem Primärsensorsignal,
∘ zur Konformitätsprüfung der ermittelten Parameterwerte in Bezug auf vorgegebene Referenzwerte und
∘ zur Ansteuerung eines Warnsignals im Fall unzureichender Konformität, eingerichtet ist,
**dadurch gekennzeichnet,**
**dass** der Primärsensor (40) ausgebildet ist als ein von den Spannmitteln (30) separater, starr mit der Ladefläche (11) gekoppelter Schwingungssensor, mittels dessen ein Schwingungszustand der Ladefläche messbar ist.

2. Transportfahrzeug nach Anspruch 1,
**dadurch gekennzeichnet,**
**dass** der für den Spannzustand der Spannmittel (30) repräsentative Parameter einen Schwingungspegel des Primärsensorsignals innerhalb eines vorgegebenen Frequenzintervalls umfasst.

3. Transportfahrzeug nach einem der vorangehenden Ansprüche,
**dadurch gekennzeichnet,**
**dass** der für den Spannzustand der Spannmittel (30) repräsentative Parameter eine Position eines lokalen Extremums innerhalb eines Schwingungsspektrums des Primärsensorsignals umfasst.

4. Transportfahrzeug nach einem der vorangehenden Ansprüche,
**gekennzeichnet durch**
einen signalübertragend mit der Steuereinheit gekoppelten, ein Kontrollsensorsignal erzeugenden Kontrollsensor (41), der als ein mit einem von der Ladefläche (11) schwingungsentkoppelten Teil des Transportfahrzeugs (10) starr gekoppelter Schwingungssensor ausgebildet ist,
wobei die Vorgabe der Referenzwerte für die Konformitätsprüfung von dem jeweils aktuellen Kontrollsensorsignal abhängig ist.

5. Transportfahrzeug nach einem der vorangehenden Ansprüche,
**dadurch gekennzeichnet,**
**dass** die Steuereinheit signalübertragend mit einem ein Fahrtgeschwindigkeitssensorsignal erzeugenden Fahrtgeschwindigkeitssensor des Transportfahrzeugs (10) gekoppelt ist,
wobei die Vorgabe der Referenzwerte für die Konformitätsprüfung von dem jeweils aktuellen Fahrtgeschwindigkeitssensorsignal abhängig ist.

6. Verfahren zum Betrieb eines Transportfahrzeugs (10) nach einem der vorangehenden Ansprüche, auf dessen Ladefläche (11) ein Transportgut (20) mittels an den Anlenkpunkten (111) angelenkter Spannmittel (30) teilumschlingend verspannt ist, umfassend
- einen Kalibrierschritt, der sich an einen Fahrtbeginn des Transportfahrzeugs (10) anschließt und im Rahmen dessen kalibrierte Referenzwerte für spätere Konformitätsprüfungen aus dem während des Kalibrierschrittes erzeugten Primärsensorsignal ermittelt und hinterlegt werden,
- einen Normalbetriebsschritt, der sich an den Kalibrierschritt anschließt und im Rahmen dessen die Konformitätsprüfung der aus dem aktuellen Primärsensorsignal ermittelten Parameterwerte des repräsentativen Parameters in Bezug auf die im Kalibrierschritt hinterlegten, kalibrierten Referenzwerten erfolgt.

7. Verfahren nach Anspruch 6,
**dadurch gekennzeichnet,**
**dass** vor Beginn des Normalbetriebsschritts die im Rahmen des Kalibrierschritts hinterlegten, kalibrierten Referenzwerte durch Vergleich mit in einem Initialreferenzspeicher der Steuereinheit hinterlegten, festen Initialreferenzwerten einem Plausibilitätstest unterzogen werden.

8. Überwachungseinrichtung für ein Transportfahrzeug (10) mit einer Ladefläche (11) zur Aufnahme eines Ladegutes (20), wobei die Ladefläche (11) eine Mehrzahl von Anlenkstellen (111) zur Anlenkung von Spannmitteln (30), mittels derer das Ladegut (20) auf der Ladefläche (11) teilumschlingend verspannbar ist, aufweist, umfassend
- einen Primärsensor (40) zur Erfassung einer vom Spannzustand der Spannmittel (30) abhängigen Messgröße und zur Erzeugung eines entsprechenden Primärsensorsignals sowie
- eine signalübertragend mit dem Primärsensor (40) gekoppelte Steuereinheit, die
∘ zur Ermittlung jeweils aktueller Parameterwerte eines für den Spannzustand der Spannmittel (30) repräsentativen Parameters aus dem Primärsensorsignal,
∘ zur Konformitätsprüfung der ermittelten Parameterwerte in Bezug auf vorgegebene Referenzwerte und
∘ zur Ansteuerung eines Warnsignals im Fall unzureichender Konformität, eingerichtet ist,
**dadurch gekennzeichnet,**
**dass** der Primärsensor (40) ausgebildet ist als ein von den Spannmitteln (30) separater, starr mit der Ladefläche (11) koppelbarer Schwingungssensor, mittels dessen im gekoppelten Zustand ein Schwingungszustand der Ladefläche messbar ist.

## Claims

1. A transport vehicle with
- a loading surface (11) for receiving a load (20), wherein the loading surface (11) has a plurality of anchor points (111) for anchoring tie-down means (30) by means of which the load (20) can be tied down on the loading surface (11) in a partial-wrap-around manner,
- a primary sensor (40) for recording a measured value dependent on the tie-down status of the tie-down means (30) and for generating a corresponding primary sensor signal, as well as
- a control unit coupled to the primary sensor in a signal-transmitting manner, which is configured
• to determine respectively current parameter values of a parameter that is representative of the tie-down status of the tie-down means (30) from the primary sensor signal,
• to check the conformity of the determined parameter values in relation to preset reference values and
• to trigger a warning signal in the event of inadequate conformity,
**characterized in that**
the primary sensor (40) is designed as a vibration sensor separate from the tie-down means (30) and rigidly attached to the loading surface (11) by means of which a vibration state of the loading surface can be measured.

2. The transport vehicle according to claim 1,
**characterized in that**
the parameter representative of the tie-down status of the tie-down means (30) comprises a vibration level of the primary sensor signal within a preset frequency interval.

3. The transport vehicle according to any one of the preceding claims,
**characterized in that**
the parameter representative of the tie-down status of the tie-down means (30) comprises a position of a local extremum within a vibration spectrum of the primary sensor signal.

4. The transport vehicle according to any one of the preceding claims,
**characterized in that**
a control sensor (41), generating a control sensor signal and coupled to the control unit in a signal-transmitting manner, is designed as a vibration sensor that is rigidly attached to a part of the transport vehicle (10) that is vibration de-coupled from the loading area (11),
wherein the presetting of the reference values for the conformity check depends on the respectively current control sensor signal.

5. The transport vehicle according to any one of the preceding claims,
**characterized in that**
the control unit is coupled in a signal-transmitting manner with a driving speed sensor of the transport vehicle (10) that generates a driving speed sensor signal,
wherein the presetting of the reference values for the conformity check depends on the respectively current driving speed sensor signal.

6. A method for operating a transport vehicle (10) according to any one of the preceding claims on the loading surface (11) of which a transport load (20) is tied down in a partial-wrap-around manner by means of tie-down means (30) anchored at the anchor points (111), comprising
- a calibration step that follows a trip start of the transport vehicle (10) and within the scope of which calibrated reference values for later conformity checks are determined from the primary sensor signal generated during the calibration step and stored,
- a normal operation step that follows the calibration step and within the scope of which the conformity check of the parameter values of the representative parameter determined from the current primary sensor signal is conducted in reference to the calibrated reference values stored during the calibration step.

7. The method according to claim 6,
**characterized in that**
before beginning the normal operation step, the calibrated reference values stored within the scope of the calibration step are subjected to a plausibility test through comparison with fixed initial reference values stored in an initial reference memory of the control unit.

8. A monitoring device for a transport vehicle (10) with a loading surface (11) to receive a load (20), wherein the loading surface (11) has a plurality of anchor points (111) for anchoring tie-down means (30), by means of which the load (20) can be tied down on the loading surface (11) in a partial-wrap-around manner, comprising
- a primary sensor (40) for recording a measured value dependent on the tie-down status of the tie-down means (30) and for generating a corresponding primary sensor signal, as well as
- a control unit coupled to the primary sensor (40) in a signal-transmitting manner that is configured
• to determine respectively current parameter values of a parameter that is representative of the tie-down status of the tie-down means (30) from the primary sensor signal,
• to check the conformity of the determined parameter values in relation to preset reference values, and
• to trigger a warning signal in the event of inadequate conformity,
**characterized in that**
the primary sensor (40) is designed as a vibration sensor separate from the tie-down means (30) and rigidly coupled to the loading surface (11), by means of which a vibration state of the loading surface is measurable in the coupled state.

## Revendications

1. Véhicule de transport comportant
- une surface de chargement (11) destinée à recevoir une charge (20), ladite surface de chargement (11) présentant une pluralité de points d'articulation (111) pour l'articulation des dispositifs de serrage (30) permettant de caler la charge (20) sur la surface de chargement (11), l'enroulant partiellement,
- un capteur primaire (40) destiné à enregistrer une grandeur à mesurer en fonction de l'état de serrage des dispositifs de serrage (30) et à générer un signal de capteur primaire correspondant, ainsi
- qu'une unité de commande couplée avec le capteur primaire (40) de façon à transmettre des signaux, qui est configurée
• pour déterminer des valeurs paramétriques actuelles d'un paramètre représentatif de l'état de serrage des dispositifs de serrage (30) à partir du signal du capteur primaire,
• pour vérifier la conformité des valeurs paramétriques déterminées par rapport aux valeurs de référence prédéfinies et
• pour émettre un signal d'alarme en cas de conformité insuffisante,
**caractérisé en ce**
**que** le capteur primaire (40) est conçu sous la forme d'un capteur de vibrations séparé des dispositifs de serrage (30), couplé de manière fixe à la surface de chargement (11) et permettant de mesurer un état vibratoire de la surface de chargement.

2. Véhicule de transport selon la revendication 1,
**caractérisé en ce**
**que** le paramètre représentatif pour l'état de serrage des dispositifs de serrage (30) comprend un niveau vibratoire du signal du capteur primaire pendant un intervalle de fréquence prédéfini.

3. Véhicule de transport selon l'une des revendications précédentes,
**caractérisé en ce**
**que** le paramètre représentatif pour l'état de serrage des dispositifs de serrage (30) comprend une position d'un extremum local dans les limites d'un spectre de vibrations du signal du capteur primaire.

4. Véhicule de transport selon l'une des revendications précédentes,
**caractérisé par**
un capteur de contrôle (41) générant un signal du capteur de contrôle et couplé avec l'unité de commande de manière à transmettre un signal, qui est conçu sous la forme d'un capteur de vibrations couplé de manière fixe avec une partie du véhicule de transport (10) découplée de la surface de chargement (11) du point de vue vibrationnel,
sachant que la prédéfinition des valeurs de référence pour la vérification de la conformité dépend du signal actuel du capteur de contrôle.

5. Véhicule de transport selon l'une des revendications précédentes,
**caractérisé en ce**
**que** l'unité de commande est couplée de manière à transmettre des signaux avec un capteur de vitesse de conduite du véhicule de transport (10) générant un signal du capteur de vitesse de conduite,
sachant que la prédéfinition des valeurs de référence pour la vérification de la conformité dépend du signal actuel du capteur de vitesse de conduite.

6. Procédé de fonctionnement d'un véhicule de transport (10) selon l'une des revendications précédentes, sur la surface de chargement (11) duquel une charge (20) est calée au moyen des dispositifs de serrage (30) articulés aux points d'articulation (111), l'enroulant partiellement, comprenant
- une étape de calibrage qui suit immédiatement un début de conduite du véhicule de transport (10) et dans le cadre duquel des valeurs de référence calibrées sont déterminées et mémorisées pour des vérifications ultérieures de la conformité sur la base du signal du capteur primaire généré pendant l'étape de calibrage,
- une étape de fonctionnement normal qui suit immédiatement l'étape de calibrage et dans le cadre duquel la conformité des valeurs paramétriques du paramètre représentatif, déterminées à partir du signal actuel du capteur primaire, est vérifiée par rapport aux valeurs de référence calibrées, mémorisées pendant l'étape de calibrage.

7. Procédé selon la revendication 6,
**caractérisé en ce**
**que**, avant le début de l'étape de fonctionnement normal, les valeurs de référence calibrées, mémorisées dans le cadre de l'étape de calibrage, sont soumises à un test de vraisemblance par comparaison avec des valeurs de référence initiales fixes, mémorisées dans une mémoire de référence initiale de l'unité de commande.

8. Dispositif de surveillance pour un véhicule de transport (10) comportant une surface de chargement (11) destinée à recevoir une charge (20), ladite surface de chargement (11) présentant une pluralité de points d'articulation (111) pour l'articulation de dispositifs de serrage (30), permettant de caler la charge (20) sur la surface de chargement (11), l'enroulant partiellement, comprenant
- un capteur primaire (40) destiné à enregistrer une grandeur à mesurer en fonction de l'état de serrage des dispositifs de serrage (30) et à générer un signal du capteur primaire correspondant, ainsi
- qu'une unité de commande couplée avec le capteur primaire (40) de façon à transmettre des signaux, qui est configurée
• pour déterminer des valeurs paramétriques actuelles d'un paramètre représentatif pour l'état de serrage des dispositifs de serrage (30) à partir du signal du capteur primaire,
• pour vérifier la conformité des valeurs paramétriques déterminées par rapport aux valeurs de référence prédéfinies et
• pour émettre un signal d'alarme en cas de conformité insuffisante,
**caractérisé en ce**
**que** le capteur primaire (40) est conçu sous la forme d'un capteur de vibrations séparé des dispositifs de serrage (30), couplé de manière fixe avec la surface de chargement (11) et permettant de mesurer un état vibratoire de la surface de chargement à l'état couplé.
